(19) 

Europäisches
Patentamt
European
Patent Office
Office européen
des brevets

(11)  **EP 4 190 876 A1**

(12)  **EUROPEAN PATENT APPLICATION**
published in accordance with Art. 153(4) EPC

(43) Date of publication:
**07.06.2023 Bulletin 2023/23**

(21) Application number: **21849849.1**

(22) Date of filing: **30.07.2021**

(51) International Patent Classification (IPC):
**C09J 11/06** (2006.01)    **C09J 133/00** (2006.01)
**C09J 163/00** (2006.01)    **C09J 201/02** (2006.01)

(52) Cooperative Patent Classification (CPC):
**C09J 11/06; C09J 133/00; C09J 163/00;
C09J 201/02**

(86) International application number:
**PCT/JP2021/028285**

(87) International publication number:
**WO 2022/025234 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2020 JP 2020130624**

(71) Applicant: **Cemedine Co., Ltd.
Tokyo 141-8620 (JP)**

(72) Inventors:
• **YANO, Shingo
  Tokyo 141-8620 (JP)**
• **TOKITA, Yu
  Tokyo 141-8620 (JP)**
• **SUZUKI, Atsuhiko
  Tokyo 141-8620 (JP)**
• **HASHIMUKAI, Hideharu
  Tokyo 141-8620 (JP)**

(74) Representative: **Grünecker Patent- und
Rechtsanwälte
PartG mbB
Leopoldstraße 4
80802 München (DE)**

(54)  **TWO-COMPONENT ADHESIVE**

(57)    An object is to provide an adhesive that has high adhesive strength (storage elastic modulus) after curing, that further exhibits high elongation after curing, and that is resistant to peeling due to a temperature history. As a solution (1), (1) a two-component adhesive including an agent A containing an epoxy resin and an agent B containing a polymer having a crosslinkable silicon group and an epoxy resin curing agent is provided. A core-shell rubber particle is contained in the agent A and/or the agent B, and a catalyst for crosslinkable silicon group condensation is contained in the agent A and/or the agent B. As a solution (2), (2) an adhesive containing an epoxy resin, a core-shell rubber particle, a polymer having a crosslinkable silicon group, an epoxy resin curing agent, and a catalyst for crosslinkable silicon group condensa- tion is provided. A cured product of the adhesive obtained by heat curing at 80°C for 30 minutes, followed by aging in a 23°C and 50% RH environment for 7 days, has a breaking strength (tensile strength at rupture) of 5 MPa or more and an elongation at break (elongation at rupture) of 30% or more, the breaking strength and the elongation at break being measured in accordance with JIS K 6251. The cured product of the adhesive obtained by heat curing at 80°C for 30 minutes, followed by aging in a 23°C and 50% RH environment for 7 days, has storage elastic moduli at 1 Hz in tensile mode of 100 to 1000 MPa at 20°C and 50 to 1000 MPa at 80°C, the storage elastic moduli being measured in accordance with JIS K 7198 (abolished and replaced with JIS K 7244-4).

**Description**

Technical Field

The present invention relates to a two-component adhesive useful for producing an article by structural bonding of various members, parts, and the like.

Background Art

A method is known in which a structural adhesive is used in producing a structure by joining various parts and members made of different materials. Conventional structural adhesives have high adhesive strength (storage elastic modulus) after curing, but cured products of the adhesives are hard and not satisfactory in terms of elongation properties. Thus, when the structure is subjected to a temperature history such that the structure is placed in cold or hot conditions, peeling may occur due to, for example, a difference in linear expansion coefficient between the parts and members.

One possible way to provide an adhesive cured product with elongation properties is to add a modified silicone resin or the like, but this way has been unable to provide a structural adhesive with satisfactory strength.

PTL 1 describes the use of a two-component curable composition as an adhesive, the two-component curable composition including an agent A containing (A) a reactive silicon group-containing polyoxyalkylene polymer, (C) an epoxy resin curing agent, and (D) a silane coupling agent and an agent B containing (E) an epoxy resin, (F) a condensation catalyst, and (G) water. This two-component curable composition is stated to have improved storage stability and good internal curability, but there is no description about its properties and usefulness as a structural adhesive.

PTL 2 discloses an epoxy resin composition including an epoxy resin, a core-shell rubber particle, and a hollow polymer. This epoxy resin composition is stated to be useful as a structural adhesive composition that can provide good adhesive strength in a wide temperature range, that provides reliable adhesion, and that is used to join different materials, but its elongation and elastic modulus are not sufficient.

PTL 3 discloses a thermosetting resin composition including an epoxy resin, a rubber particle having a core-shell structure, an epoxy silane coupling agent, and a polybutadiene having alkoxysilyl groups at both ends. This thermosetting resin composition is stated to be useful as a structural adhesive because it shows little decrease in adhesive strength (storage elastic modulus) after curing even if placed under high-temperature and high-humidity conditions after being applied, but its elongation and elastic modulus are not sufficient.

Citation List

Patent Literature

PTL 1: Japanese Unexamined Patent Application Publication No. 2002-309077
PTL 2: Japanese Unexamined Patent Application Publication No. 2010-270198
PTL 3: Japanese Unexamined Patent Application Publication No. 2019-199606

Summary of Invention

Technical Problem

An object of the present invention is to provide an adhesive that has high adhesive strength (storage elastic modulus) after curing, that further exhibits high elongation after curing, and that is resistant to peeling due to a temperature history.

Solution to Problem

As a result of intensive studies to solve the above problems, the present inventors have found that an adhesive described below, a cured product obtained by curing the adhesive, and an article obtained by bonding with the adhesive can solve the above problems, thereby completing the present invention. Specifically, the present invention is represented by the following [1] to [4].

[1] A two-component adhesive including:

an agent A containing an epoxy resin; and

an agent B containing a polymer having a crosslinkable silicon group and an epoxy resin curing agent,

in which a core-shell rubber particle is contained in the agent A and/or the agent B, and a catalyst for crosslinkable silicon group condensation is contained in the agent A and/or the agent B.

[2] The two-component adhesive according to [1], in which a (meth)acrylic polymer is contained in the agent B.

[3] An adhesive containing an epoxy resin, a core-shell rubber particle, a polymer having a crosslinkable silicon group, an epoxy resin curing agent, and a catalyst for crosslinkable silicon group condensation,

in which a cured product of the adhesive obtained by heat curing at 80°C for 30 minutes, followed by aging in a 23°C and 50% RH environment for 7 days, has a breaking strength (tensile strength at rupture) of 5 MPa or more and an elongation at break (elongation at rupture) of 30% or more, the breaking strength and the elongation at break being measured in accordance with JIS K 6251, and

the cured product of the adhesive obtained by heat curing at 80°C for 30 minutes, followed by aging in a 23°C and 50% RH environment for 7 days, has storage elastic moduli at 1 Hz in tensile mode of 100 to 1000 MPa at 20°C and 50 to 1000 MPa at 80°C, the storage elastic moduli being measured in accordance with JIS K 7198 (abolished and replaced with JIS K 7244-4).

[4] A cured product obtained by curing the adhesive according to any one of [1] to [3].

[5] An article obtained by bonding with the adhesive according to any one of [1] to [3].

Advantageous Effects of Invention

The present invention can provide an adhesive that has high adhesive strength (storage elastic modulus) after curing, that further exhibits high elongation after curing, and that is resistant to peeling due to a temperature history.

Description of Embodiments

[First adhesive]

A first adhesive according to the present invention is a two-component adhesive including an agent A containing an epoxy resin and an agent B containing a polymer having a crosslinkable silicon group and an epoxy resin curing agent. A core-shell rubber particle is contained in the agent A and/or the agent B, and a catalyst for crosslinkable silicon group condensation is contained in the agent A and/or the agent B.

The agent B may contain a (meth)acrylic polymer.

<Epoxy resin>

The epoxy resin is not particularly limited as long as it is a compound having two or more epoxy groups in its molecule.

Examples of such epoxy resins include one or more selected from the group consisting of biphenyl epoxy resins; bisphenol epoxy resins such as bisphenol A epoxy resins, bisphenol F epoxy resins, tetramethyl bisphenol F epoxy resins, bisphenol E epoxy resins, bisphenol S epoxy resins, bisphenol AD epoxy resins, bisphenol M epoxy resins (4,4'-(1,3-phenylenediisopropylidene)bisphenol epoxy resins), bisphenol P epoxy resins (4,4'-(1,4-phenylenediisopropylidene)bisphenol epoxy resins), bisphenol Z epoxy resins (4,4'-cyclohexydienebisphenol epoxy resins), hydrogenated bisphenol epoxy resins thereof, and halogenated (brominated, chlorinated) bisphenol epoxy resins thereof; stilbene epoxy resins; novolac epoxy resins such as phenol novolac epoxy resins, brominated phenol novolac epoxy resins, cresol novolac epoxy resins, and novolac epoxy resins having a fused-ring aromatic hydrocarbon structure; polyfunctional epoxy resins such as trihydroxyphenylmethane epoxy resins, alkyl-modified trihydroxyphenylmethane epoxy resins, and tetraphenylolethane epoxy resins; phenol aralkyl epoxy resins such as phenylene backbone-containing phenol aralkyl epoxy resins and biphenylene backbone-containing phenol aralkyl epoxy resins; epoxy resins having a naphthalene backbone, such as dihydroxynaphthalene epoxy resins, naphthalenediol epoxy resins, bifunctional or tetrafunctional naphthalene dimer epoxy resins obtained by glycidyl etherification of dimers of hydroxynaphthalene and/or dihydroxynaphthalene, naphthylene ether epoxy resins, binaphthyl epoxy resins, and naphthol aralkyl epoxy resins; anthracene epoxy resins; phenoxy epoxy resins; bridged cyclic hydrocarbon compound-modified phenol epoxy resins such as dicyclopentadiene-modified phenol epoxy resins; norbornene epoxy resins; adamantane epoxy resins; fluorene epoxy resins, phosphorus-containing epoxy resins, alicyclic epoxy resins, aliphatic chain epoxy resins, bisphenol A novolac epoxy resins, and bisphenol A resol epoxy resins; heterocyclic epoxy resins such as triglycidyl isocyanurate and monoallyl diglycidyl isocyanurate; glycidyl amines such as N,N,N',N'-tetraglycidyl meta-xylenediamine, N,N,N',N'-tetraglycidyl bisaminomethylcyclohexane, and N,N-diglycidylaniline; copolymers of glycidyl (meth)acrylate and compounds having an ethylenically unsaturated double bond; rubber-modified epoxy resins containing polybutadiene or NBR; and the like.

Alternatively, modified epoxy resins having a siloxane bond that are obtained by modifying these epoxy resins with alkoxysilane, silsesquioxane, or the like may also be used. Examples of the modified epoxy resins having a siloxane bond include an alkoxysilane-modified epoxy resin composition disclosed in Japanese Unexamined Patent Application Publication No. 2010-275411 and a silsesquioxane-modified epoxy resin disclosed in Japanese Patent No. 5569703. Examples of commercially available products thereof include one or more selected from the group consisting of COMPOCERAN E series, COMPOCERAN SQ series, etc. manufactured by Arakawa Chemical Industries, Ltd.

Of these, one or more selected from the group consisting of bisphenol epoxy resins, novolac epoxy resins, epoxy resins having a naphthalene backbone, rubber-modified epoxy resins, and the like are preferably used from the viewpoint of, for example, curability, adhesion, water resistance, durability, workability, availability, and general versatility. In the present invention, bisphenol epoxy resins are more preferably used.

One type of epoxy resin may be used alone, or two or more types of epoxy resin may be used in combination.

The epoxy resin can be used in an amount of, for example, 20 to 80 parts by mass, preferably 25 to 70 parts by mass, more preferably 30 to 60 parts by mass, relative to 100 parts by mass of the agent A. The epoxy resin can be used in an amount of 10 to 60 parts by mass, preferably 15 to 50 parts by mass, more preferably 20 to 50 parts by mass, relative to 100 parts by mass of the total of the agent A and the agent B.

If the amount of the epoxy resin is less than 10 parts by mass relative to 100 parts by mass of the total of the agent A and the agent B, the adhesive may have low curability, thus resulting in a low breaking strength (tensile strength at rupture) and a low storage elastic modulus. If the amount of the epoxy resin is more than 60 parts by mass relative to 100 parts by mass of the total of the agent A and the agent B, the amount of the polymer having a crosslinkable silicon group relatively decreases, which may result in a low breaking strength (tensile strength at rupture) and a low storage elastic modulus.

<Core-shell rubber particle>

The core-shell rubber particle is contained in the agent A and/or the agent B.

The core-shell rubber particle is a particle that has a core and a polymer shell layer covering at least part of the surface of the core and that may optionally have an intermediate layer between the core and the shell layer, the core being a rubber particle formed of a polymer including an elastomeric or rubber-like polymer.

The core, the intermediate layer, and the shell layer may each be composed of a single layer or multiple layers. When any of the layers has a multilayer structure, the multiple layers may be composed of different components.

The core and/or the shell layer may be crosslinked through, for example, ionic bonding or covalent bonding as needed.

The shell layer may be formed by graft polymerization on the core. The shell layer may have a reactive functional group such as an epoxy group or a carboxyl group.

The volume-average particle size of the core-shell rubber particle is not particularly limited. A volume-average particle size of 30 um or less can significantly improve stress relaxation properties.

In the present invention, the volume-average particle size of the core-shell rubber particle is, for example, 0.01 um or more, preferably 0.02 um or more, more preferably 0.05 um or more, and is preferably 10 um or less, more preferably 5 um or less, still more preferably 2 um or less.

(Core)

From the viewpoint of providing an adhesive cured product with improved toughness, the core of the core-shell rubber particle is formed of one selected from the group consisting of diene rubber (e.g., butadiene rubber, butadiene-styrene rubber, butadiene butyl acrylate rubber, isoprene rubber, chloroprene rubber, and butyl acrylate rubber) obtained from a monomer component including a conjugated diene monomer as a principal component and optionally including a copolymerizable monomer, natural rubber, organosiloxane rubber, acrylic rubber obtained from a monomer component including an alkyl (meth)acrylate ester as a principal component and optionally including a copolymerizable monomer, and the like.

Examples of the conjugated diene monomer include one or more selected from the group consisting of butadiene, isoprene, chloroprene, and the like. In the present invention, butadiene is preferred.

Examples of the alkyl (meth)acrylate ester include one or more selected from the group consisting of methyl (meth)acrylate, ethyl (meth)acrylate, propyl (meth)acrylate, butyl (meth)acrylate, cyclohexyl (meth)acrylate, 2-ethylhexyl (meth)acrylate, and the like. In the present invention, butyl (meth)acrylate is preferred.

Examples of monomers copolymerizable therewith include aromatic vinyls such as styrene, vinyltoluene, and α-methylstyrene; aromatic vinylidenes; vinyl cyanides such as acrylonitrile and methacrylonitrile; vinylidene cyanides; alkyl methacrylates such as methyl methacrylate and butyl methacrylate; and aromatic (meth)acrylates such as benzyl acrylate, phenoxyethyl acrylate, and benzyl methacrylate. In addition, a monomer having a functional group such as an epoxy group, a carboxyl group, a hydroxyl group, or an amino group may be copolymerized. Examples include one or more selected from the group consisting of glycidyl (meth)acrylate, methacrylic acid, acrylic acid, maleic acid, itaconic acid, 2-hydroxy methacrylate, 2-hydroxy acrylate, and the like. In the present invention, the core is preferably formed of one or more selected from the group consisting of diene rubber and acrylic rubber from the viewpoint of, for example, the effect of improving the toughness of an adhesive cured product, affinity for the epoxy resin, temporal stability, and general versatility.

To provide an adhesive cured product with enhanced toughness and enhanced stress relaxation properties, the glass transition temperature (Tg) of the polymer constituting the core is 0°C or lower, preferably -20°C or lower, more preferably -30°C or lower, still more preferably -60°C or lower, and is -200°C or higher. When the core is composed of two or more layers, at least one layer preferably has a glass transition temperature of 0°C or lower.

(Intermediate layer)

The core-shell rubber particle may have an intermediate layer between the core and the shell layer.
The component forming the intermediate layer is not particularly limited. For example, a (co)polymer of a conjugated diene and/or an alkyl (meth)acrylate ester, or a polymer resulting from copolymerization of the conjugated diene and/or the alkyl (meth)acrylate ester with a monomer copolymerizable therewith is preferably contained.
Here, examples of the conjugated diene, the alkyl (meth)acrylate ester, and the monomer copolymerizable therewith include one or more selected from the group consisting of those used in forming the core.
The glass transition temperature of the intermediate layer is 0°C or lower, preferably -30°C or lower.

(Shell layer)

For reasons of compatibility with adhesive components and dispersibility in the adhesive, the shell layer of the core-shell rubber particle is formed of a monomer component including an alkyl (meth)acrylate ester as a principal component and optionally including a copolymerizable monomer.
Examples of the alkyl (meth)acrylate ester and the monomer copolymerizable therewith for forming the shell layer include one or more selected from the group consisting of those used in forming the core.
The shell layer may have a group having reactivity or affinity with other adhesive components by optionally including, as a monomer component forming the shell layer, a monomer containing one or more selected from the group consisting of an epoxy group, a hydroxy group, an oxetane group, an amino group, an imide group, a carboxylic acid group, a carboxylic anhydride group, a cyclic ester, a cyclic amide, a benzoxazine group, and a cyanate ester group.
The amount of the alkyl (meth)acrylate ester in the monomer component forming the shell layer is 10 to 95 mass%, preferably 30 to 92 mass%, more preferably 50 to 90 mass%, relative to 100 mass% of the total shell layer-forming monomer.
The glass transition temperature of the polymer constituting the shell layer is 40°C or higher, preferably 50°C or higher.

(Composition of layers of core-shell rubber particle)

In the core-shell rubber particle, there is no limitation on the composition ratio of the core, the intermediate layer, and the shell layer.
The amount of the core is 20 to 95 mass%, preferably 50 to 95 mass%, more preferably 60 to 90 mass%, relative to 100 mass% of the total core-shell rubber particle.
The amount of the intermediate layer is 0 to 50 mass%, preferably 0 to 30 mass%, more preferably 0 to 20 mass%, relative to 100 mass% of the total core-shell rubber particle.
The amount of the shell layer is 5 to 80 mass%, preferably 5 to 50 mass%, more preferably 10 to 40 mass%, relative to 100 mass% of the total core-shell rubber particle.

(Method for producing core-shell rubber particle)

The method for producing the core-shell rubber particle is not particularly limited, and the core-shell rubber particle can be produced by a method known in the art, such as emulsion polymerization, suspension polymerization, or microsuspension polymerization.
The core can be formed, for example, by emulsion polymerization, suspension polymerization, or microsuspension polymerization using a monomer component for forming the core.

The intermediate layer can be formed by polymerizing a monomer for forming the intermediate layer by known radical polymerization (e.g., emulsion polymerization).

The shell layer can be formed by polymerizing a monomer for forming the shell layer by known radical polymerization (emulsion polymerization).

The shell layer is preferably formed by graft polymerization of a monomer for forming the shell layer on the core and/or the intermediate layer.

The polymerization of the monomer for forming each layer may be carried out in one stage or two or more stages.

(Form of core-shell rubber particle, etc.)

The core-shell rubber particle can be incorporated into a liquid A and/or a liquid B, for example, in powder form.

Alternatively, the core-shell rubber particle may be incorporated into the liquid A, for example, in the form of being pre-dispersed in the epoxy resin, that is, in the form of an epoxy resin composition. The amount of the core-shell rubber particle in the epoxy resin composition is not particularly limited, and is, for example, 1 to 80 mass%, preferably 5 to 70 mass%, more preferably 10 to 60 mass%, still more preferably 20 to 50 mass%, relative to 100 mass% of the total of the epoxy resin and the core-shell rubber particle.

(Commercially available core-shell rubber particle)

Various commercially available core-shell rubber particles may be used. These commercially available core-shell rubber particles may be used alone or in combination of two or more.

Examples include one or more selected from the following group, but are not limited thereto.

(a) STAPHYLOID series, ZEFIAC series, GANZPEARL series, etc. (e.g., F351, IM-101, IM-203, IM-301, IM-401, IM-601, AC-3355, AC-3364, AC-3816, AC-3832, and AC-4030) manufactured by Aica Kogyo Company, Limited.
(b) METABLEN series, etc. (e.g., C-140A, C-201A, C-215A, C-223A, C-303A, C-323A, C-102, C-132, C-202, E-901, W-341, W-300A, W-450A, S-2001, SX-005, SX-006, SRK200E, W-5500, and J-5800) manufactured by Mitsubishi Chemical Corporation.
(c) GENIOPERL series (e.g., P22, P23, P52, and P53) manufactured by Wacker Chemie.
(d) PARALOID series (e.g., EXL 230, EXL 2311, EXL 2335, EXL 2650A, EXL 2655, EXL 3330, EXL 2300G, EXL 2300, and 2691A) manufactured by The Dow Chemical Company.
(e) DEGALAN series (e.g., 4899F) manufactured by Roehm.
(f) BLENDEX series manufactured by General Electric.

As the core-shell rubber particle, various commercially available epoxy resin-core-shell rubber particle compositions marketed in the form of being pre-dispersed in epoxy resin may be used. These various commercially available epoxy resin-core-shell rubber particle compositions may be used alone or in combination of two or more.

Examples include one or more selected from the following group, but are not limited thereto.

(g) Kane Ace series (e.g., MX120, MX125, MX130, MX136, MX154, MX551, and MX960) manufactured by Kaneka Corporation.
(h) GENIOPERL series (e.g., M23A) manufactured by Wacker Chemie.

(Amount of core-shell rubber particle)

One type of core-shell rubber particle may be used alone, or two or more types of core-shell rubber particle may be used in combination.

The core-shell rubber particle can be used in an amount of, for example, 3 to 35 parts by mass, preferably 5 to 30 parts by mass, more preferably 5 to 20 parts by mass, relative to 100 parts by mass of the total of the agent A and the agent B. When contained in the agent A, the core-shell rubber particle can be used in an amount of 5 to 50 parts by mass, preferably 10 to 45 parts by mass, more preferably 10 to 40 parts by mass, relative to 100 parts by mass of the agent A.

If the amount of the core-shell rubber particle is less than 3 parts by mass relative to 100 parts by mass of the total of the agent A and the agent B, an adhesive cured product having low toughness and hence having a low breaking strength (tensile strength at rupture), a low elongation at break (elongation at rupture), and a low storage elastic modulus may be provided. If the amount of the core-shell rubber particle is more than 35 parts by mass relative to 100 parts by mass of the total of the agent A and the agent B, the adhesive may have low curing reactivity, thus resulting in a low breaking strength (tensile strength at rupture) and a low storage elastic modulus.

When a dispersion of the core-shell rubber particle in the epoxy resin is used, the content of the core-shell rubber particle and the content of the epoxy resin are each determined, and the amount of each component is used.

<Catalyst for crosslinkable silicon group condensation>

The catalyst for crosslinkable silicon group condensation is contained in the agent A and/or agent B. When the catalyst for crosslinkable silicon group condensation is contained in the liquid B, the liquid B is preferably stored in a damp-proof and water-proof container.

The catalyst for crosslinkable silicon group condensation may be any compound that exhibits a catalytic action when the crosslinkable silicon group, which is a group that has a hydroxyl group or hydrolyzable group bonded to a silicon atom and that can crosslink by forming a siloxane bond, undergoes a hydrolysis reaction in the presence of water to effect curing.

Here, the crosslinkable silicon group is, for example, a group represented by formula (1):

$$-SiR^1_{3-a}X_a \qquad (1)$$

(In formula (1), $R^1$ represents an organic group. When two or more $R^1$'s are present, the plurality of $R^1$'s may be the same or different. X represents a hydroxyl group or a hydrolyzable group, and when two or more X's are present, the plurality of X's may be the same or different. a is an integer of 1, 2, or 3).

Examples of the catalyst for crosslinkable silicon group condensation include one or more selected from the group consisting of organometallic compounds (e.g., organotin compounds, organoiron compounds, organoaluminum compounds, and organotitanium compounds), amines, fatty acids (e.g., organic acid bismuth), organic acidic phosphate ester compounds, silicon compounds having a Si-F bond, and the like.

Of these, one or more selected from the group consisting of organometallic compounds that are silanol condensation catalysts, fatty acids, and organic acidic phosphate ester compounds are preferably used.

Particularly preferably, one or more selected from the group consisting of organotin compounds and organoiron compounds represented by the following formulae:

$Sn(OCOR^2)_2$, $Sn(OCOR^2)_4$, $R^3_2Sn(OCOR^2)_2$, $[R^3_2Sn(OCOR^2)]_2O$, $R^3_2Sn(OCOCH=CHCOOR^2)_2$, $R^3_2Sn(OCOCH=CHCOO)_2$, $R^3_2Sn(SR^4COOR^2)_2$, $[R^3_2Sn(SR^4COOR^2)]_2O$, $R^3_2Sn[OSi(OR^5)_3]_2$, $[R^3_2SnOSi(OR^5)_3]_2O$, and $Fe(OCOR^2)_2$

(where $R^2$ and $R^3$ each independently represent an alkyl group having 1 to 20 carbon atoms, and two or more $R^2$'s or $R^3$'s in one molecule may be the same or different from each other;

$R^4$ represents a divalent alkylene group having 1 to 6 carbon atoms, and two or more $R^4$'s in one molecule may be the same or different from each other; and

$R^5$ represents an alkyl group having 1 to 10 carbon atoms, and two or more $R^5$'s in one molecule may be the same or different from each other.)

are used.

Specific examples of $R^2$ include one or more selected from the group consisting of $-CH_3$, $-C_2H_5$, $-C_4H_9$, $-C_8H_{17}$, $-C_{17}H_{35}$, naphthyl, and the like.

Specific examples of $R^3$ include one or more selected from the group consisting of $-CH_3$, $-C_2H_5$, $-C_4H_9$, $-C_8H_{17}$, $-C_{17}H_{35}$, and the like.

Specific examples of $R^4$ include one or more selected from the group consisting of $-CH_2-$, $-C_2H_4-$, $-C_3H_6-$, $-C_4H_8-$, and the like.

Specific examples of $R^5$ include one or more selected from the group consisting of $-CH_3$, $-C_2H_5$, $-C_4H_9$, $-C_8H_{17}$, and the like.

Specific examples of preferred organotin compounds and organoiron compounds include one or more selected from the group consisting of $Sn(OCOC_7H_{15})_2$, $Sn(OCOC_{17}H_{35})_2$, $(C_4H_9)_2Sn(OCOCH_3)_2$, $(C_4H_9)_2Sn(OCOC_7H_{15})_2$, $(C_4H_9)_2Sn(OCOC_{11}H_{23})_2$, $[(C_4H_9)_2Sn(OCOC_{11}H_{23})]_2O$, $(C_8H_{17})_2Sn(OCOC_{11}H_{23})_2$, $(C_4H_9)_2Sn(OCOC_{17}H_{35})_2$, $(C_8H_{17})_2Sn(OCOC_{17}H_{35})_2$, $(C_4H_9)_2Sn(OCOCH=CHCOOC_2H_5)_2$, $(C_4H_9)_2Sn(OCOCH=CHCOOC_4H_9)_2$, $(C_4H_9)_2Sn(OCOCH=CHCOOCH_2C_6H_5)_2$, $(C_4H_9)_2Sn(OCOCH=CHCOO)$, $(C_4H_9)_2Sn(SC_2H_4COOC_9H_{19})_2$, $(C_4H_9)_2Sn(SCH_2COOC_8H_{17})_2$, $[(C_4H_9)_2Sn(SC_2H_4COOC_9H_{19})]_2O$, $(C_4H_9)_2Sn[OSi(OCH_3)_3]_2$, $(C_4H_9)_2Sn[OSi(OC_2H_5)_3]_2$, $[(C_4H_9)_2SnOSi(OC_2H_5)_3]_2O$, $Fe(OCOC_7H_{15})_2$, $Fe(OCOC_{17}H_{35})_2$, $Fe(OCOCH_2C_5H_9)_2$, $Fe(OCOC_2H_4C_5H_9)_2$, $Fe(OCOC_{10}H_{17})_2$, and the like.

As the silicon compound having a Si-F bond, various compounds including a silicon group having a Si-F bond (hereinafter also referred to as a fluorosilyl group) can be used. The silicon compound having a Si-F bond may be an inorganic compound or an organic compound. The silicon compound having a Si-F bond is preferably an organic compound having a fluorosilyl group, and an organic polymer having a fluorosilyl group is more suitable because of its high safety. A low-molecular-weight organic silicon compound having a fluorosilyl group is preferred because a composition with low viscosity is provided. Examples of the silicon compound having a Si-F bond include one or more selected from the group consisting of fluorosilane, compounds having a fluorosilyl group, organic polymers having a fluorosilyl group, and the like, all of which are described in International Publication No. 2015/088021.

The catalyst for crosslinkable silicon group condensation may be used alone or in combination of two or more kinds.

The catalyst for crosslinkable silicon group condensation can be used in an amount of, for example, 0.05 to 10 parts by mass, preferably 0.1 to 5 parts by mass, more preferably 0.2 to 3 parts by mass, relative to 100 parts by mass of the polymer having a crosslinkable silicon group.

If the amount of the catalyst for crosslinkable silicon group condensation is less than 0.05 parts by mass relative to 100 parts by mass of the polymer having a crosslinkable silicon group, the polymer having a crosslinkable silicon group may be insufficiently cured to decrease the curability, thus resulting in a low breaking strength (tensile strength at rupture) and a low storage elastic modulus. If the amount of the catalyst for crosslinkable silicon group condensation is more than 10 parts by mass relative to 100 parts by mass of the polymer having a crosslinkable silicon group, the reactivity of the polymer having a crosslinkable silicon group and the epoxy resin may decrease under the influence of the excessive catalyst for crosslinkable silicon group condensation, thus resulting in a low breaking strength (tensile strength at rupture) and a low storage elastic modulus.

<Polymer having crosslinkable silicon group>

The polymer having a crosslinkable silicon group contained in the agent B is not particularly limited as long as it is a polymer having a crosslinkable silicon group, which is a group that has a hydroxyl group or hydrolyzable group bonded to a silicon atom and that can crosslink by forming a siloxane bond, at an end and/or a side chain.

(Crosslinkable silicon group)

As described above, the crosslinkable silicon group is, for example, a group represented by formula (1):

$$-SiR^1_{3-a}X_a \qquad (1)$$

(In formula (1), $R^1$ represents an organic group. When two or more $R^1$'s are present, the plurality of $R^1$'s may be the same or different. X represents a hydroxyl group or a hydrolyzable group, and when two or more X's are present, the plurality of X's may be the same or different. a is an integer of 1, 2, or 3).

The organic group represented by $R^1$ in formula (1) is not particularly limited as long as it is a group that does not exhibit hydrolyzability. For example, the organic group is a hydrocarbon group optionally substituted with a group having 1 to 20 carbon atoms, preferably an alkyl group having 1 to 6 carbon atoms.

The hydrolyzable group represented by X in formula (1) is not particularly limited as long as it is a group other than hydroxyl groups that undergoes hydrolysis upon contact with water. Examples include hydrogen, halogen atoms, alkoxy groups, acyloxy groups, ketoximate groups, amino groups, amide groups, acid amide groups, mercapto groups, aminooxy groups, and alkenyloxy groups. Of these, alkoxy groups are preferred from the viewpoint of mild hydrolyzability and ease of handling, and alkoxy groups having 1 to 6 carbon atoms with high reactivity are preferred. In particular, a methoxy group, an ethoxy group, and a butoxy group are preferred.

In formula (1), a is preferably 2 or greater, more preferably 3. When a is 2 or greater, an adhesive having sufficient flexibility can be provided.

Examples of the crosslinkable silicon group include one or more selected from the group consisting of trialkoxysilyl groups such as a trimethoxysilyl group and a triethoxysilyl group and dialkoxysilyl groups such as a methyldimethoxysilyl group and a methyldiethoxysilyl group.

The polymer may have one kind or two or more kinds of crosslinkable silicon group.

The crosslinkable silicon group may be bonded to an end and/or a side chain of the polymer. To provide an adhesive cured product excellent in physical properties such as tensile properties, the crosslinkable silicon group is preferably present at an end of the molecular chain.

In the polymer having a crosslinkable silicon group, an average of 1.0 to 5.0, preferably 1.1 to 3.0 crosslinkable silicon groups are present in one molecule of the polymer.

If the number of crosslinkable silicon groups in one molecule of the polymer is less than one, the curability may be insufficient, whereas too many crosslinkable silicon groups may result in a so dense network structure that good mechanical properties are not exhibited.

(Polymer main-chain backbone)

Examples of the main-chain backbone of the polymer having a crosslinkable silicon group include one or more selected from the group consisting of polyoxyalkylene polymers, (meth)acrylic polymers, isobutylene polymers, butadiene polymers, olefin polymers, styrene polymers, vinyl halide polymers, vinyl acetate polymers, vinyl alcohol polymers, vinyl acetal polymers, copolymers thereof, and the like.

In the present invention, one or more selected from the group consisting of a polyoxyalkylene polymer having a crosslinkable silicon group, a (meth)acrylic polymer having a crosslinkable silicon group, and an isobutylene polymer having a crosslinkable silicon group are preferred. One or more selected from the group consisting of a polyoxyalkylene polymer having a crosslinkable silicon group and a (meth)acrylic polymer having a crosslinkable silicon group are particularly preferred.

(Polyoxyalkylene polymer having crosslinkable silicon group)

The main-chain backbone of the polyoxyalkylene polymer having a crosslinkable silicon group is a polymer having a repeating unit represented by formula (2):

$$-R^6-O- \qquad (2)$$

(where $R^6$ is a divalent organic group having 1 to 20 carbon atoms).

$R^6$ in formula (2) is one or more selected from the group consisting of, for example, linear or branched alkylene groups having 2 to 20 carbon atoms, preferably linear or branched alkylene groups having 2 to 14 carbon atoms, more preferably linear or branched alkylene groups having 2 to 6 carbon atoms.

Examples of the repeating unit represented by formula (2) include one or more selected from the group consisting of $-CH_2CH_2O-$, $-CH(CH_3)CH_2O-$, $-CH_2CH(CH_3)O-$, $-CH_2CH(C_2H_5)O-$, $-CH(C_2H_5)CH_2O-$, $-CH_2C(CH_3)_2O-$, $-CH_2CH_2CH_2O-$, $-CH_2CH_2CH_2CH_2O-$, and the like.

The main-chain backbone of the polyoxyalkylene polymer may be composed of only one type of repeating unit or may be composed of two or more types of repeating unit.

In the present invention, the main-chain backbone of the polyoxyalkylene polymer having a crosslinkable silicon group is preferably one or more selected from the group consisting of polyoxyethylene polymers, polyoxypropylene polymers, polyoxytetramethylene polymers, and polyoxyethylene-polyoxypropylene copolymers, and is particularly preferably a (co)polymer having a polyoxypropylene repeating unit as a principal component. A branched structure may be present in the main-chain backbone.

The polyoxyalkylene polymer having a crosslinkable silicon group may be used alone or in combination of two or more kinds.

The molecular weight of the polyoxyalkylene polymer having a crosslinkable silicon group is not particularly limited. From the viewpoint of, for example, workability of the adhesive including the polyoxyalkylene polymer, the number-average molecular weight is 500 or more, preferably 1,000 or more, and the number-average molecular weight is 100,000 or less, preferably 70,000 or less.

From the viewpoint of imparting moderate viscosity to the adhesive, a polymer having a number-average molecular weight of 20,000 or more is preferably included.

The number-average molecular weight in the present invention is a molecular weight in terms of polystyrene determined by gel permeation chromatography.

The polyoxyalkylene polymer having a crosslinkable silicon group, when having a moderately low crosslinkable silicon group content, provides a cured product that has a low crosslink density and hence is more flexible at the initial stage, thus achieving decreased modulus properties and increased elongation at break (elongation at rupture) properties.

In the polyoxyalkylene polymer having a crosslinkable silicon group, the number of crosslinkable silicon groups present in one molecule of the polymer is 1.0 to 5.0, preferably 1.2 to 2.8, more preferably 1.3 to 2.6, still more preferably 1.4 to 2.4, on average.

The main-chain backbone of the polyoxyalkylene polymer can be synthesized through, for example, ring-opening polymerization of a monoepoxide in the presence of an initiator and a catalyst.

Examples of the initiator include one or more selected from the group consisting of dihydric alcohols and polyhydric alcohols such as ethylene glycol, propylene glycol, butanediol, hexamethylene glycol, methallyl alcohol, bisphenol A, hydrogenated bisphenol A, neopentyl glycol, polybutadiene diol, diethylene glycol, triethylene glycol, polyethylene glycol, polypropylene glycol, polypropylene triol, polypropylene tetraol, dipropylene glycol, glycerol, trimethylolmethane, trimethylolpropane, and pentaerythritol; various oligomers having a hydroxyl group; and the like.

Examples of the monoepoxide include one or more selected from the group consisting of alkylene oxides such as ethylene oxide, propylene oxide, α-butylene oxide, β-butylene oxide, hexene oxide, cyclohexene oxide, styrene oxide, and α-methylstyrene oxide; alkyl glycidyl ethers such as methyl glycidyl ether, ethyl glycidyl ether, isopropyl glycidyl ether, and butyl glycidyl ether; allyl glycidyl ethers; and the like.

As the catalyst, for example, one or more selected from the group consisting of alkaline catalysts such as KOH and NaOH, acidic catalysts such as trifluoroborane-etherate, composite metallocyanide complex catalysts such as aluminoporphyrin metal complexes and cobalt zinc cyanideglyme complex catalysts, and the like can be used.

The polyoxyalkylene polymer can be, but need not be, obtained, for example, by polymerization in the presence of an alkaline catalyst such as KOH or polymerization in the presence of a composite metallocyanide complex catalyst.

The polymerization in the presence of a composite metallocyanide complex catalyst can provide, with few side reactions, a high molecular weight and narrow molecular weight distribution polyoxyalkylene polymer having a number-average molecular weight of 6,000 or more and a weight-average molecular weight (Mw)/number-average molecular weight (Mn) ratio of 1.6 or less.

The main-chain backbone of the polyoxyalkylene polymer can also be obtained, for example, by chain extension of a hydroxyl-terminated polyoxyalkylene polymer with an alkyl halide having two to more functional groups, such as $CH_2Cl_2$ or $CH_2Br_2$, in the presence of a basic compound such as KOH, NaOH, $KOCH_3$, or $NaOCH_3$.

Alternatively, the hydroxyl-terminated polyoxyalkylene polymer can also be chain-extended with a bifunctional or trifunctional isocyanate compound.

The method of introducing a crosslinkable silicon group into a polyoxyalkylene polymer is not particularly limited, and various methods can be used. For example, by reacting a polyoxyalkylene polymer having, in its molecule, a functional group such as an unsaturated group, a hydroxyl group, an epoxy group, or an isocyanate group with a compound having a functional group reactive with the functional group of the polyoxyalkylene polymer and a crosslinkable silicon group, the crosslinkable silicon group can be introduced into the polyoxyalkylene polymer.

In the present invention, reacting a polyoxyalkylene polymer having a terminal unsaturated group represented by formula (3) and/or a terminal unsaturated group represented by formula (4) in one molecule with a crosslinkable silicon group-containing compound represented by formula (5) in the presence of a group VIII transition metal catalyst is preferred.

$$CH_2=CH-R^7-O- \qquad (3)$$

$$CH_2=C(R^8)-R^7-O- \qquad (4)$$

(In the formulae, each $R^7$ independently represents a divalent organic group having 1 to 20 carbon atoms, and $R^8$ represents a hydrocarbon group having 10 or less carbon atoms.)

$$H-[Si(R^9)_{2-b}(X)_bO]_m-Si(R^{10})_{3-a}X_a \qquad (5)$$

(In the formula, $R^9$ and $R^{10}$ represent the same or different alkyl groups having 1 to 20 carbon atoms, aryl groups having 6 to 20 carbon atoms, aralkyl groups having 7 to 20 carbon atoms, or triorganosiloxy groups represented by $(R')_3SiO-$, and when two or more $R^9$'s or $R^{10}$'s are present, they may be the same or different. R' is a monovalent hydrocarbon group having 1 to 20 carbon atoms, and the three R"s may be the same or different. X represents a hydroxyl group or a hydrolyzable group, and when two or more X's are present, they may be the same or different. a represents 0, 1, 2, or 3, b represents 0, 1, or 2, and $a + \Sigma b \geq 2$ is satisfied. b's in m $-[Si(R^9)_{2-b}(X)_b-O]-$ groups may be the same or different. m represents an integer of 0 to 19.)

For addition of a crosslinkable silicon group-containing isocyanate compound to a hydroxyl-terminated polyoxyalkylene polymer, reaction of an isocyanate-terminated polyoxyalkylene polymer with a crosslinkable silicon group-containing amine compound, reaction of an isocyanate-terminated polyoxyalkylene polymer with a crosslinkable silicon group-containing mercaptan compound, and other methods can also be used.

The polyoxyalkylene polymer may include other backbones such as a polyurethane backbone. The polyurethane backbone can be formed, for example, by reaction of one or more selected from the group consisting of polyisocyanates including aromatic polyisocyanates such as toluene diisocyanate and diphenylmethane diisocyanate; and aliphatic polyisocyanates such as isophorone diisocyanate and hexamethylene diisocyanate with a polyoxyalkylene polymer having a hydroxyl group.

Examples of the method of producing the polyoxyalkylene polymer having a terminal unsaturated group represented by formula (3) or formula (4) include reacting a hydroxyl-terminated polyoxyalkylene polymer with a compound having an unsaturated group and a functional group reactive with hydroxyl groups to introduce the unsaturated group into the polyoxyalkylene polymer through an ether bond, an ester bond, a urethane bond, or a carbonate bond.

When the unsaturated group is introduced through an ether bond, for example, -OM (M is Li, Na, or K) is formed by metaloxylation of the hydroxyl end of the polyoxyalkylene polymer, and an unsaturated group-containing compound represented by formula (6) or formula (7) is then reacted.

$$CH_2=CH-R^7-X^2 \qquad (6)$$

$$CH_2=C(R^8)-R^7-X^2 \qquad (7)$$

(In the formulae, $R^7$ and $R^8$ are as defined above. $X^2$ is a halogen atom.)

Examples of the unsaturated group-containing compound represented by formula (6) or (7) include one or more selected from the group consisting of $CH_2=CHCH_2Cl$, $CH_2=CHCH_2Br$, $CH_2=CHC_2H_4Cl$, $CH_2=CHC_2H_4Br$, $CH_2=CHC_3H_6Cl$, $CH_2=CHC_3H_6Br$, $CH_2=C(CH_3)CH_2Cl$, $CH_2=C(CH_3)CH_2Br$, $CH_2=C(CH_2CH_3)CH_2Cl$, $CH_2=C(CH_2CH_3)CH_2Br$, $CH_2=C(CH_2CH(CH_3)_2)CH_2Cl$, $CH_2=C(CH_2CH(CH_3)_2)CH_2Br$, and the like. In particular, $CH_2=CHCH_2Cl$ and/or $CH_2=C(CH_3)CH_2Cl$ is preferred from the viewpoint of reactivity.

Alternatively, the unsaturated group can also be introduced by using an isocyanate compound having an unsaturated group such as a $CH_2=CHCH_2-$ group or a $CH_2=C(CH_3)CH_2-$ group, a carboxylic acid, an epoxy compound, or the like.

Examples of the group VIII transition metal catalyst include one or more metal complex catalysts selected from the group consisting of group VIII transition metal elements such as platinum, rhodium, cobalt, palladium, and nickel.

Examples include one or more selected from the group consisting of $H_2PtCl_6 \cdot 6H_2O$, platinum-vinyl siloxane complexes, platinum-olefin complexes, Pt metal, $RhCl(PPh_3)_3$, $RhCl_3$, $Rh/Al_2O_3$, $RuCl_3$, $IrCl_3$, $FeCl_3$, $PdCl_2 \cdot 2H_2O$, $NiCl_2$, and the like. Of these, any one or more of $H_2PtCl_6 \cdot 6H_2O$, platinum-vinyl siloxane complexes, and platinum-olefin complexes are preferably used from the viewpoint of hydrosilation reactivity.

((Meth)acrylic polymer having crosslinkable silicon group)

The main-chain backbone of the (meth)acrylic polymer having a crosslinkable silicon group is a polymer having a repeating unit represented by formula (8):

$$-CH_2-C(R^{11})(COOR^{12})- \qquad (8)$$

(where $R^{11}$ is H or a methyl group, and $R^{12}$ is a divalent organic group having 1 to 30 carbon atoms).

The main-chain structure of the (meth)acrylic polymer may be composed of only one type of repeating unit or may be composed of two or more types of repeating unit. When the (meth)acrylic polymer is a copolymer, it may be a random polymer, a block polymer, or a graft polymer, but is preferably a random polymer.

"(Meth)acrylic" means acrylic and/or methacrylic.

The (meth)acrylic polymer constituting the main-chain backbone of the (meth)acrylic polymer having a crosslinkable silicon group has a glass transition temperature (Tg) of 0°C or higher, preferably 20°C or higher, more preferably 40°C or higher, and 120°C or lower, preferably 100°C or lower, more preferably 80°C or lower.

A glass transition temperature of lower than 0°C tends to lead to poor adhesive strength (storage elastic modulus) immediately after adhesion. A glass transition temperature of higher than 120°C tends to lead to high viscosity, making it difficult to apply the adhesive to an adherend.

In the present invention, the glass transition temperature (Tg) is a value obtained by converting a glass transition temperature $Tg_a$ in absolute temperature determined by formula (a) below into a temperature in degrees Celsius.

$$1/Tg_a = \Sigma(W_i/Tg_i) \qquad (a)$$

(In formula (a), $Tg_a$ is a glass transition temperature (in absolute temperature) of a polymer composed only of a monofunctional (meth)acrylic monomer (C1). $W_i$ is a mass fraction of a (meth)acrylic monomer i in the (meth)acrylic polymer. $Tg_i$ is a glass transition temperature (in absolute temperature) of a homopolymer formed only of the

(meth)acrylic monomer i.)

The formula (a), which is called the Fox equation, is a formula for calculating the glass transition temperature $Tg_a$ of a polymer on the basis of the glass transition temperature $Tg_i$ of a homopolymer of each monomer constituting the polymer.

Details thereof are described in Bulletin of the American Physical Society, Series 2, Vol. 1, No. 3, p. 123 (1956). As the glass transition temperatures (Tgi) of homopolymers of various monomers for making calculations with the Fox equation, values described in, for example, The Finish & Paint (Toryo Publishing Co., Ltd., 10 (No. 358), 1982) can be employed.

The weight-average molecular weight of the (meth)acrylic polymer constituting the main-chain backbone of the (meth)acrylic polymer having a crosslinkable silicon group is 1,000 or more, preferably 2,000 or more, more preferably 3,000 or more, and is 20,000 or less, preferably 10,000 or less, more preferably 6,000 or less. A weight-average molecular weight of less than 1,000 leads to low initial adhesive strength (storage elastic modulus) after application, and a weight-average molecular weight of more than 20,000 leads to excessive high viscosity during an application operation, thus resulting in low workability.

The weight-average molecular weight in the present invention is a molecular weight in terms of polystyrene determined by gel permeation chromatography.

Preferably, the (meth)acrylic polymer is solid at room temperature (20°C) or has a ring and ball softening point of 80°C or higher.

In the (meth)acrylic polymer having a crosslinkable silicon group, the number of crosslinkable silicon groups present in one molecule of the polymer is 1.0 to 5.0, preferably 1.1 to 3.0, more preferably 1.3 to 2.6, still more preferably 1.4 to 2.4, on average.

The main-chain structure of the (meth)acrylic polymer can be synthesized by radical polymerization of a monomer component including a (meth)acrylic monomer.

For example, standard solution polymerization or bulk polymerization using a thermal polymerization initiator, e.g., a peroxide such as benzoyl peroxide or an azo compound such as azobisisobutyronitrile, can be used. Alternatively, a known polymerization method such as polymerization by irradiation with light or radiation using a photopolymerization initiator or living radical polymerization may be used.

Of these, radical polymerization using a thermal polymerization initiator is preferred because a (meth)acrylate ester polymer can be readily obtained.

In radical copolymerization, a chain transfer agent such as lauryl mercaptan or $\gamma$-mercaptopropyltrimethoxysilane may be used to adjust the molecular weight.

The (meth)acrylic monomer included in the monomer component constituting the main-chain structure of the (meth)acrylic polymer may be one or more represented by formula (9):

$$CH_2=C(R^{13})(COOR^{14}) \qquad (9)$$

(where $R^{13}$ is H or a methyl group, and $R^{14}$ is a divalent organic group having 1 to 30 carbon atoms).

The (meth)acrylic monomer represented by formula (9) is preferably an alkyl (meth)acrylate ester having an alkyl group with 1 to 30 carbon atoms, particularly preferably an alkyl (meth)acrylate ester having an alkyl group with 1 to 30 carbon atoms and not having a substituent.

Examples of the alkyl (meth)acrylate ester include one or more selected from the group consisting of methyl (meth)acrylate, ethyl (meth)acrylate, n-butyl (meth)acrylate, 2-ethylhexyl (meth)acrylate, lauryl (meth)acrylate, stearyl (meth)acrylate, and the like.

In the present invention, methyl methacrylate is preferably included as an essential monomer component.

From the viewpoint of exhibiting high adhesion, one or more selected from the group consisting of alkyl (meth)acrylate esters having an ester group with 8 or more carbon atoms, such as 2-ethylhexyl (meth)acrylate, lauryl (meth)acrylate, and stearyl (meth)acrylate, are preferably included.

From the viewpoint of imparting flexibility to the (meth)acrylate ester polymer, one or more selected from the group consisting of alkyl (meth)acrylate esters having a glass transition temperature (Tg) of 0°C or lower, such as n-butyl acrylate (Tg = -55°C), 2-ethylhexyl acrylate (Tg = - 70°C), and lauryl acrylate (Tg = -3°C), are preferably used. The glass transition temperature is a glass transition temperature of a homopolymer.

The hydrocarbon group such as an alkyl group of the (meth)acrylate ester may have a substituent such as a hydroxyl group, an alkoxy group, a halogen atom, or an epoxy group. Examples of such compounds include one or more selected from the group consisting of (meth)acrylate esters having a hydroxyl group, such as hydroxyethyl (meth)acrylate; (meth)acrylate esters having an alkoxy group, such as methoxyethyl (meth)acrylate; (meth)acrylate esters having an epoxy group, such as glycidyl (meth)acrylate; and (meth)acrylate esters having an amino group, such as diethylaminoethyl (meth)acrylate. Alternatively, an unsaturated compound (macromonomer or macromer) having a polymer chain, such as an acrylate ester having a polystyrene chain, can also be used.

The monomer component constituting the main-chain structure of the (meth)acrylic polymer may include a monomer copolymerizable with the (meth)acrylic monomer represented by formula (9). Examples include one or more selected from the group consisting of unsaturated carboxylic acids such as (meth)acrylic acid; (meth)acrylamide compounds such as (meth)acrylamide; vinyl ether compounds such as alkyl vinyl ethers; (meth)acrylonitrile compounds; aromatic vinyl compounds such as styrene and $\alpha$-methylstyrene; vinyl halide compounds such as vinyl chloride; vinyl carboxylate ester compounds such as vinyl acetate; and the like.

In the present invention, the content of methyl methacrylate relative to 100 parts by mass of the total monomer component constituting the main-chain structure of the (meth)acrylic polymer is 20 parts by mass or more, preferably 30 parts by mass or more, more preferably 40 parts by mass or more, and is 90 parts by mass or less, preferably 80 parts by mass or less.

The content of the monomer copolymerizable with the (meth)acrylic monomer represented by formula (9) relative to 100 parts by mass of the total monomer component constituting the main-chain structure of the (meth)acrylic polymer is 20 parts by mass or less, preferably 10 parts by mass or less, more preferably 5 parts by mass or less. When the monomer copolymerizable with the (meth)acrylic monomer represented by formula (9) is a macromonomer, the content of the macromonomer relative to 100 parts by mass of the total monomer component constituting the main-chain structure of the (meth)acrylic polymer is 10 parts by mass or less, preferably 5 parts by mass or less, more preferably 3 parts by mass or less.

The method of introducing a crosslinkable silicon group into a (meth)acrylic polymer is not particularly limited, and various methods can be used.

For example, a crosslinkable silicon group can be introduced into a (meth)acrylic polymer by any of the following methods: (1) copolymerization of an unsaturated compound having a crosslinkable silicon group; (2) polymerization using an initiator or chain transfer agent having a crosslinkable silicon group; and (3) reaction of a (meth)acrylic polymer having, in its molecule, a functional group such as an unsaturated group, a hydroxyl group, an epoxy group, or an isocyanate group with a compound having a functional group reactive with the functional group of the (meth)acrylic polymer and a crosslinkable silicon group.

In the present invention, from the viewpoint of easily introducing a crosslinkable silicon group, it is preferable to use (1) copolymerization of an unsaturated compound having a crosslinkable silicon group or (1) and (2) in combination.

The unsaturated compound having a crosslinkable silicon group used for the copolymerization is preferably a (meth)acrylate ester having a crosslinkable silicon group or an unsaturated olefin compound having a crosslinkable silicon group. Examples include one or more selected from the group consisting of (meth)acrylate esters having a crosslinkable silicon group, such as γ-(meth)acryloxypropyltrimethoxysilane, γ-(meth)acryloxypropyltriethoxysilane, γ-(meth)acryloxypropylmethyldimethoxysilane, and γ-(meth)acryloxypropylmethyldiethoxysilane; unsaturated olefin compounds having a crosslinkable silicon group, such as vinyltrimethoxysilane, vinyltriethoxysilane, allyltrimethoxysilane, and allyltriethoxysilane; and the like.

Examples of the initiator or chain transfer agent having a crosslinkable silicon group include γ-mercaptopropyltrimethoxysilane and γ-mercaptopropyltriethoxysilane.

In the present invention, the (meth)acrylic polymer having a crosslinkable silicon group can be obtained by a method in accordance with Synthesis Example 4 of International Publication No. 2015/088021 using, for example, methyl methacrylate, 2-ethylhexyl methacrylate, γ-methacryloxypropyltrimethoxysilane, titanocene dichloride (metal catalyst), γ-mercaptopropyltrimethoxysilane (initiator and chain transfer agent), and a benzoquinone solution (polymerization terminator).

When the method (3) is used in the present invention, the method can be the same as the above method of introducing a crosslinkable silicon group into a polyoxyalkylene polymer.

For example, reacting a (meth)acrylic polymer having a terminal unsaturated group represented by formula (3) above and/or a terminal unsaturated group represented by formula (4) above with a crosslinkable silicon group-containing compound represented by formula (5) above in the presence of a group VIII transition metal catalyst is preferred.

(Commercially available polymer having crosslinkable silicon group)

As the polymer having a crosslinkable silicon group contained in the agent B, various commercially available products marketed as denatured silicone resins/modified silicone resins may be used. These commercially available polymers having a crosslinkable silicon group (denatured silicone resins/modified silicone resins) may be used alone or in combination of two or more.

Examples include one or more selected from the following group, but are not limited thereto.

(a) Kaneka MS Polymer series, Silyl series, FCS Polymer series, Telechelic Polyacrylate XMAP series, etc. (e.g., SAT010, SAX115, SAT030, SAT200, SAT220, SAT350, SAT400, SAX220, SAX260, SAX510, SAX530, SAX575, SAX580, SAX710, SAX720, SAX725, SAX770, S203, S303, S203H, S303H, S943S, S903, S911S, MA430, MA440, MA447, MA451, MA903, MA903M, MA904, S943, MAX923, MAX951, SAX520, EP100S, EP103S, EP303S, EP505S, FCS-1, FCS-2, FCS-5, FCS-7, FCS-8, FCSA-1, FCSA-2, SA100S, SA310S, SA410S, SB802S, and OR100S) manufactured by Kaneka Corporation.

(b) EXCESTAR series (e.g., ES-S3620, ES-S3430, ES-S2420, and ES-S2410) manufactured by AGC Inc.

(c) ACTFLOW series manufactured by Soken Chemical & Engineering Co., Ltd., STP E-30 manufactured by Wacker Chemie, etc.

The polymer having a crosslinkable silicon group can be used in an amount of, for example, 70 to 98 parts by mass, preferably 75 to 95 parts by mass, more preferably 80 to 95 parts by mass, relative to 100 parts by mass of the agent B. The polymer having a crosslinkable silicon group can be used in an amount of 30 to 65 parts by mass, preferably 30 to 60 parts by mass, more preferably 35 to 60 parts by mass, relative to 100 parts by mass of the total of the agent A and the agent B.

If the amount of the polymer having a crosslinkable silicon group is less than 30 parts by mass relative to 100 parts by mass of the total of the agent A and the agent B, the adhesive may have low curability, thus resulting in a low breaking strength (tensile strength at rupture) and a low storage elastic modulus. If the amount of the polymer having a crosslinkable silicon group is more than 65 parts by mass relative to 100 parts by mass of the total of the agent A and the agent B, the amount of the epoxy resin relatively decreases, which may result in a low breaking strength (tensile strength at rupture) and a low storage elastic modulus.

<Epoxy resin curing agent>

The epoxy resin curing agent contained in the agent B is not particularly limited as long as it is a compound that acts as a curing agent for the epoxy resin.

Examples include one or more selected from the group consisting of aliphatic amines such as ethylenediamine, diethylenetriamine, triethylenetetramine, tetraethylenepentamine, diethylaminopropylamine, hexamethylenediamine, methylpentamethylenediamine, trimethylhexamethylenediamine, guanidine, and oleylamine; alicyclic amines such as menthanediamine, isophoronediamine, norbornanediamine, piperidine, N,N'-dimethylpiperazine, N-aminoethylpiperazine, 1,2-diaminocyclohexane, bis(4-amino-3-methylcyclohexyl)methane, bis(4-aminocyclohexyl)methane, polycyclohexyl polyamine, and 1,8-diazabicyclo[5,4,0]undecene-7 (DBU); aromatic amines such as metaphenylenediamine, 4,4'-diaminodiphenylmethane, and 4,4'-diaminodiphenylsulfone; aliphatic aromatic amines such as m-xylylenediamine, benzyldimethylamine, 2-(dimethylaminomethyl)phenol, and 2,4,6-tris(dimethylaminomethyl)phenol; amines having an ether bond such as 3,9-bis(3-aminopropyl)-2,4,8,10-tetraoxaspiro[5,5]undecane (ATU), morpholine, N-methylmorpholine, polyoxypropylenediamine, polyoxypropylenetriamine, and polyoxyethylenediamine; hydroxyl group-containing amines such as diethanolamine and triethanolamine; acid anhydrides such as tetrahydrophthalic anhydride, methyltetrahydrophthalic anhydride, methylnadic anhydride, hexahydrophthalic anhydride, and dodecylsuccinic anhydride; polyamides obtained by the reaction of dimer acids and polyamines and polyamidoamines obtained by the reaction of polycarboxylic acids and polyamines; imidazoles such as 2-ethyl-4-methylimidazole; dicyandiamides; phenols; modified amines such as epoxy-modified amines obtained by the reaction of polyamines and epoxy compounds, Mannich-modified amines obtained by reacting polyamines, aldehydes, and phenolic compounds, Michael addition-modified amines, and ketimine; amine salts such as 2-ethylhexanoic acid salt of 2,4,6-tris(dimethylaminomethyl)phenol; amidines; and the like.

Of these epoxy resin curing agents, one or more selected from the group consisting of tertiary amine compounds and amines having an ether bond are preferred in terms of curability and the balance of physical properties. In the present invention, it is particularly preferable to use a tertiary amine compound.

Examples of the tertiary amine compound include one or more selected from the group consisting of alicyclic amines such as N,N'-dimethylpiperazine; aliphatic aromatic amines such as benzyldimethylamine, 2-(dimethylaminomethyl)phenol, and 2,4,6-tris(dimethylaminomethyl)phenol; amines having an ether bond such as morpholine and N-methylmorpholine; hydroxyl group-containing amines such as triethanolamine; modified amines such as epoxy-modified amines obtained by reacting amines with epoxy compounds, Mannich-modified amines obtained by reacting amines with formalin and phenols, Michael addition-modified amines, and ketimine; amine salts such as 2-ethylhexanoic acid salt of 2,4,6-tris(dimethylaminomethyl)phenol; imidazoles such as imidazole and 2-ethyl-4-methylimidazole; imidazolines such as 2-methylimidazoline and 2-phenylimidazoline; cyclic amidines such as 1,8-diazabicyclo[5,4,0]undecene-7 (DBU), 6-(dibutylamino)-1,8-diazabicyclo[5,4,0]undecene-7 (DBA-DBU), and 1,5-diazabicyclo[4,3,0]nonene-5 (DBN); amidine salts such as DBU-phenol salt, DBU-octyl acid salt, DBU-p-toluenesulfonic acid salt, and DBU-phenol novolac resin salt; and the like.

In the present invention, it is preferable to use a tertiary amine compound having active hydrogen. Examples of the tertiary amine compound having active hydrogen include 2-(dimethylaminomethyl)phenol and 2,4,6-tris(dimethylaminomethyl)phenol.

The epoxy resin curing agent may be used alone or in combination of two or more kinds.

The epoxy resin curing agent can be used in an amount of, for example, 0.5 to 100 parts by mass, preferably 1 to 70 parts by mass, more preferably 5 parts by mass or more and 50 parts by mass, relative to 100 parts by mass of the epoxy resin.

If the amount of the epoxy curing agent is less than 0.5 parts by mass relative to 100 parts by mass of the epoxy resin, the epoxy resin may be insufficiently cured, thus resulting in a low breaking strength (tensile strength at rupture) and a low storage elastic modulus. If the amount of the epoxy curing agent is more than 100 parts by mass relative to 100 parts by mass of the epoxy resin, the reactivity of the polymer having a crosslinkable silicon group may decrease under the influence of the excessive epoxy resin curing agent, thus resulting in a low breaking strength (tensile strength at rupture) and a low storage elastic modulus.

The agent B may contain a (meth)acrylic polymer.

The (meth)acrylic polymer may be the above (meth)acrylic polymer having a crosslinkable silicon group. In this case, the polymer having a crosslinkable silicon group can be composed of a (meth)acrylic polymer having one or more crosslinkable silicon groups. Alternatively, the polymer having a crosslinkable silicon group can be composed of a (meth)acrylic polymer having one or more crosslinkable silicon groups and another polymer having one or more crosslinkable silicon groups.

The (meth)acrylic polymer need not have a crosslinkable silicon group. Examples of such a (meth)acrylic polymer not having a crosslinkable silicon group include those obtained by the method of producing the above (meth)acrylic polymer having a crosslinkable silicon group but without introducing the crosslinkable silicon group into the (meth)acrylic polymer.

The (meth)acrylic polymer may be used alone or in combination of two or more kinds.

The (meth)acrylic polymer can be used in an amount of, for example, 0 to 98 parts by mass, preferably 0 to 60 parts by mass, more preferably 0 to 45 parts by mass, relative to 100 parts by mass of the agent B.

<Other components>

To the adhesive according to the present invention, one or more "other components" selected from the group consisting of water, a silane coupling agent, a tackifier, a bulking agent, a plasticizer, an anti-sagging agent, an antioxidant, a pigment, a filler, a diluent, a porous additive, an anti-aging agent, a UV absorber, a perfume, a dye, a reinforcing agent, a colorant, a flame retardant, and the like may be added as needed, to the extent that the properties of the adhesive are not impaired.

These "other components" can be added to the agent A and/or the agent B taking into account, for example, the reactivity with the components constituting the agent A or the agent B.

(Water)

Water is necessary for the hydrolytic condensation reaction of the polymer having a crosslinkable silicon group.

Water is preferably contained in the agent A from the viewpoint of, for example, improving the curability of the adhesive, improving the adhesive strength (storage elastic modulus) after curing, ensuring the thickness of a coating of the adhesive, and storage stability.

Water may be, but not necessarily, common tap water, industrial water, pure water, or other water, and water vapor in the air may also be used.

The amount of water is not particularly limited, and may be, for example, 0.01 to 5 parts by mass, preferably 0.05 to 2 parts by mass, relative to 100 parts by mass of the total of the agent A and the agent B.

(Silane coupling agent)

The silane coupling agent may be contained in either the agent A or the agent B from the viewpoint of, for example, improving the curability of the adhesive, improving the adhesive strength (storage elastic modulus) after curing of the adhesive, functioning as a co-catalyst for the hydrolytic condensation reaction of the polymer having a crosslinkable silicon group, and improving wettability on various adherends. In the case of a silane coupling agent having active hydrogen, such as aminosilane, since the silane coupling agent can react also with the epoxy resin, it is preferably contained in the agent B from the viewpoint of, for example, usefulness in improving the curability of the adhesive and improving the adhesive strength (storage elastic modulus) after curing of the adhesive and storage stability.

Examples of the silane coupling agent include, but are not limited to, one or more selected from the group consisting of amino group-containing silanes such as γ-aminopropyltrimethoxysilane and N-(β-aminoethyl)-γ-aminopropyltrimethoxysilane; mercapto group-containing silanes such as γ-mercaptopropyltrimethoxysilane; epoxy group-containing silanes such as γ-glycidoxypropyltrimethoxysilane and β-(3,4-epoxycyclohexyl)ethyltrimethoxysilane; ketimine-type silanes such as N-(1,3-dimethylbutylidene)-3-(triethoxysilyl)-1-propaneamine; vinyl-type unsaturated group-containing silanes such as vinyltrimethoxysilane and γ-methacryloyloxypropyltrimethoxysilane; chlorine-containing silanes such as γ-chloropropyltrimethoxysilane; isocyanate-containing silanes such as γ-isocyanatopropyltriethoxysilane; such as decyltrimethoxysilane; phenyl group-containing silanes such as phenyltrimethoxysilane; and the like. Alternatively, modified amino group-containing silanes having a modified amino group that are obtained by reacting an amino group-containing silane with any of epoxy group-containing compounds, isocyanate group-containing compounds, and (meth)acryloyl group-containing compounds including the above silanes may be used. These silane coupling agents may be used alone or in combination of two or more.

In the present invention, in view of the reactivity with the epoxy resin, silane coupling agents having active hydrogen are preferred, and amino group-containing silanes, mercapto group-containing silanes, and modified amino group-containing silanes are preferred.

The amount of the silane coupling agent is not particularly limited, and may be, for example, 0.1 to 10 parts by mass, preferably 0.5 to 5 parts by mass, relative to 100 parts by mass of the total of the agent A and the agent B.

(Tackifier)

Examples of the tackifier include terpene resins, phenol resins, terpene-phenol resins, rosin resins, and xylene resins. These tackifiers may be used alone or in combination of two or more.

(Bulking agent)

As the bulking agent, reinforcing bulking agents such as fumed silica, precipitated silica, fused silica, silicic anhydride, and carbon black; bulking agents such as calcium carbonate, magnesium carbonate, aluminum hydroxide, aluminum oxide, titanium oxide, diatomaceous earth, calcined clay, clay, talc, titanium oxide, bentonite, organic bentonite, ferric oxide, zinc oxide, active zinc white, and shirasu balloon; fibrous bulking agents such as asbestos, glass fibers, and filaments; and the like can be used. These bulking agents may be used alone or in combination of two or more.

(Plasticizer)

Examples of the plasticizer include phthalate esters such as dioctyl phthalate; aliphatic dibasic acid esters such as dioctyl adipate; glycol esters; aliphatic esters; phosphate esters; polyester plasticizers; polyethers such as polypropylene glycol and derivatives thereof; hydrocarbon plasticizers; chlorinated paraffins; and low-molecular-weight acrylate ester polymers. These plasticizers may be used alone or in combination of two or more.

(Anti-sagging agent)

As the anti-sagging agent, a wide variety of known anti-sagging agents can be used without any limitation. Examples include one or more selected from the group consisting of polyamide waxes; hydrogenated castor oil derivatives; metallic soaps such as calcium stearate, aluminum stearate, and barium stearate, organic bentonite, silica, modified polyester polyol, inorganic thixotropic agents such as asbestos powder, organic thixotropic agents such as fatty acid amides; and the like.

(Antioxidant)

Examples of the antioxidant include compounds such as hindered phenols, butylated hydroxytoluene, and butylated hydroxyanisole. These antioxidants may be used alone or in combination of two or more.

(Pigment)

Examples of the pigment include inorganic pigments such as carbon black, titanium oxide, zinc oxide, ultramarine blue, red iron oxide, lithopone, lead, cadmium, iron, cobalt, aluminum, hydrochlorides, and sulfates, and organic pigments such as azo pigments and copper phthalocyanine pigments. These pigments may be used alone or in combination of two or more.

(Filler)

As the filler, one or more selected from the group consisting of a resin filler (resin fine powder), an inorganic filler, and a functional filler can be used. The filler may be surface treated with a silane coupling agent, a titanium chelating agent, an aluminum coupling agent, a fatty acid, a fatty acid ester, rosin, or the like. As the resin filler, a particulate filler made of an organic resin or the like can be used. For example, the resin filler may be one or more selected from the group consisting of organic fine particles of polyacrylate ester resins, polyurethane resins, polyethylene resins, polypropylene resins, urea resins, melamine resins, benzoguanamine resins, phenol resins, acrylic resins, styrene resins, and the like.

(Diluent)

The adhesive according to the present invention may also contain a diluent. Here, the diluent is defined as a solvent having a flash point (open-cup) of 50°C or higher. The inclusion of the diluent can adjust physical properties such as viscosity. As the diluent, various diluents can be used. Examples of the diluent include one or more various solvents selected from the group consisting of saturated hydrocarbon solvents such as normal paraffins and isoparaffins, α-olefin derivatives such as LINEALENE Dimer (Idemitsu Kosan Co., Ltd., trade name), aromatic hydrocarbon solvents, alcohol solvents, ester solvents, citrate ester solvents such as acetyl triethyl citrate, ketone solvents, and the like.

(Porous additive)

The adhesive according to the present invention may contain a porous additive. Examples of the porous additive include inorganic compounds having pores (mesopores) and compounds having oil absorbability. For example, at least one compound having a porous structure and/or oil absorbability selected from the group consisting of silica, aluminum hydroxide, magnesium hydroxide, barium sulfate, magnesium carbonate, barium carbonate, and the like can be used. The shape of the porous additive is not particularly limited and may be, for example, spherical, cataclastic, disk-like, rod-like, or fibriform.

The surface of the porous additive may be physically or chemically treated to be hydrophilic or hydrophobic. When the surface is hydrophobized, the porous additive is preferably a chemically hydrophobized compound having an oil absorption (defined amount in accordance with JIS K 5101) of 50 ml/100 g or more. Using a porous additive having a hydrophobized surface increases adhesion to the polymer having a crosslinkable silicon group and/or the epoxy resin, thus providing a cured product with improved properties such as mechanical strength. Furthermore, using a porous additive having an oil absorption of 50 ml/100 g or more and a hydrophobized surface improves adhesion to the epoxy resin and can also suppress coloring during heat curing. As the porous additive, for example, porous silica is suitable for use.

The apparent density of the porous additive is not particularly limited, and is 0.4 g/cm$^3$ or more, preferably 0.4 g/cm$^3$ to 2.0 g/cm$^3$, from the viewpoint of ensuring the mechanical strength of the porous additive. Here, the apparent density refers to a density determined taking into account the density occupied by raw materials of the porous additive and the space occupied by micropores (i.e., pore volume).

The average particle size of the porous additive is not particularly limited, and is preferably 0.1 to 100 um from the viewpoint of maintaining good flowability of the adhesive.

The specific surface area of the porous additive is 100 m$^2$/g to 1000 m$^2$/g, preferably 300 m$^2$/g to 700 m$^2$/g. A specific surface area of less than 100 m$^2$/g makes it difficult to maintain an appropriate amount of oil supply of the porous additive, and a specific surface area of more than 1000 m$^2$/g makes it difficult to maintain good flowability of the porous additive.

The porous additive may be contained in either the agent A or the agent B.

The amount of the porous additive is not particularly limited. For example, the amount of the porous additive relative to 100 parts by mass of the polymer having a crosslinkable silicon group is preferably 1 part by mass or more, more preferably 2 parts by mass or more, and is preferably 50 parts by mass or less, more preferably 30 parts by mass or less from the viewpoint of workability.

[Second adhesive]

A second adhesive according to the present invention is an adhesive containing an epoxy resin, a core-shell rubber particle, a polymer having a crosslinkable silicon group, an epoxy resin curing agent, and a catalyst for crosslinkable silicon group condensation,

in which a cured product of the adhesive obtained by heat curing at 80°C for 30 minutes, followed by aging in a 23°C and 50% RH environment for 7 days, has a breaking strength (tensile strength at rupture) of 5 MPa or more and an elongation at break (elongation at rupture) of 30% or more, the breaking strength and the elongation at break being measured in accordance with JIS K 6251, and

the cured product of the adhesive obtained by heat curing at 80°C for 30 minutes, followed by aging in a 23°C and 50% RH environment for 7 days, has storage elastic moduli at 1 Hz in tensile mode of 100 to 1000 MPa at 20°C and 50 to 1000 MPa at 80°C, the storage elastic moduli being measured in accordance with JIS K 7198 (abolished and replaced with JIS K 7244-4).

<Components of second adhesive>

The epoxy resin, the core-shell rubber particle, the polymer having a crosslinkable silicon group, the epoxy resin curing agent, and the catalyst for crosslinkable silicon group condensation contained in the second adhesive according to the present invention may be the same as those contained in the agent A or the agent B of the first adhesive according to the present invention.

The second adhesive according to the present invention may contain any one or more of the "other components" which may be contained in the first adhesive according to the present invention.

The amount of each component contained in the second adhesive according to the present invention is the same as the amount of each component relative to the total amount of the agent A and agent B or the amount of each component relative to the amount of specific component, as specified in the first adhesive according to the present invention.

<Breaking strength (tensile strength at rupture) and elongation at break (elongation at rupture)>

The breaking strength (tensile strength at rupture) of a cured product of the second adhesive according to the present invention can be determined by the following method.

At least an epoxy resin, a core-shell rubber particle, a polymer having a crosslinkable silicon group, an epoxy resin curing agent, and a catalyst for crosslinkable silicon group condensation are mixed and stirred to prepare an adhesive, after which the adhesive is uniformly loaded into a mold having a depth of 2 mm, heat cured at 80°C for 30 minutes, and then further aged in a 23°C and 50% RH environment for 7 days to produce a cured adhesive sheet.

From the cured adhesive sheet obtained, a dumbbell-shaped No. 3 specimen specified in JIS K 6251 is die-cut and collected. Using the specimen thus obtained, a force is applied to the specimen at a tensile speed set to 10 mm/min until the specimen breaks, and the breaking strength (tensile strength at rupture) (MPa) and elongation at break (elongation at rupture) (%) at this time are measured. The method of calculating the elongation at break (elongation at rupture) (%) is as follows.

```
Elongation at break (elongation at rupture) (%) =
((length of specimen at break (at rupture)) - (length of
specimen before test))/(length of specimen before test) ×
100
```

A cured product of the second adhesive according to the present invention obtained by heat curing at 80°C for 30 minutes, followed by aging in a 23°C and 50% RH environment for 7 days, has a breaking strength (tensile strength at rupture), as measured in accordance with JIS K 6251, of 5 MPa or more, preferably 5 to 30 MPa, more preferably 7 to 25 MPa, still more preferably 10 to 20 MPa.

If the breaking strength (tensile strength at rupture) is less than 5 MPa, the adhesive strength (storage elastic modulus) after curing may be insufficient, making it difficult to use the adhesive as a structural adhesive.

The cured product of the second adhesive according to the present invention obtained by heat curing at 80°C for 30 minutes, followed by aging in a 23°C and 50% RH environment for 7 days, has an elongation at break (elongation at rupture), as measured in accordance with JIS K 6251, of 30% or more, preferably 50% or more, more preferably 50% to 400%, still more preferably 55% to 300%.

If the elongation at break (elongation at rupture) is less than 30%, the adhesive cured product may be brittle, and the adhesive strength (storage elastic modulus) after curing may be insufficient, making it difficult to use the adhesive as a structural adhesive.

<Storage elastic modulus>

The storage elastic moduli (20°C and 80°C) at 1 Hz in tensile mode, as measured in accordance with JIS K 7198 (abolished and replaced with JIS K 7244-4), of a cured product of the second adhesive according to the present invention obtained by heat curing at 80°C for 30 minutes, followed by aging in a 23°C and 50% RH environment for 7 days, can be determined by the following method.

At least an epoxy resin, a core-shell rubber particle, a polymer having a crosslinkable silicon group, an epoxy resin curing agent, and a catalyst for crosslinkable silicon group condensation are mixed and stirred to prepare an adhesive, after which the adhesive is uniformly loaded into a mold having a depth of 2 mm, heat cured at 80°C for 30 minutes, and then further aged in a 23°C and 50% RH environment for 7 days to produce a cured adhesive sheet.

A 10 mm × 40 mm specimen is collected from the cured adhesive sheet obtained. The specimen obtained is measured for storage elastic moduli (E' (MPa)) using a dynamic viscoelasticity measurement (DMA) apparatus (DMS6100 manufactured by Seiko Instruments Inc.) under the following conditions.

(Conditions of DMA measurement)

Measurement frequency: 1 Hz, measurement mode: tensile, heating rate: 5°C/min, measurement temperature: -100°C to 200°C

The cured product of the second adhesive according to the present invention obtained by heat curing at 80°C for 30 minutes, followed by aging in a 23°C and 50% RH environment for 7 days, has a storage elastic modulus at 1 Hz in tensile mode, as measured in accordance with JIS K 7198 (abolished and replaced with JIS K 7244-4), of 100 to 1000 MPa at 20°C. The storage elastic modulus is preferably 100 to 700 MPa, more preferably 100 to 650 MPa, still more preferably 100 to 600 MPa.

If the storage elastic modulus at 20°C is less than 100 MPa, the adhesive strength (storage elastic modulus) after curing may be insufficient, making it difficult to use the adhesive as a structural adhesive. If the storage elastic modulus at 20°C is more than 1000 MPa, materials constituting the adhesive may be costly, and the elongation at break (elongation at rupture) of the adhesive cured product may be low.

The cured product of the second adhesive according to the present invention obtained by heat curing at 80°C for 30 minutes, followed by aging in a 23°C and 50% RH environment for 7 days, has a storage elastic modulus at 1 Hz in tensile mode, as measured in accordance with JIS K 7198 (abolished and replaced with JIS K 7244-4), of 50 to 1000 MPa at 80°C. The storage elastic modulus is preferably 50 to 700 MPa, more preferably 50 to 200 MPa, still more preferably 45 to 180 MPa.

If the storage elastic modulus at 80°C is less than 50 MPa, the adhesive strength (storage elastic modulus) after curing may be insufficient, making it difficult to use the adhesive as a structural adhesive. If the storage elastic modulus at 80°C is more than 1000 MPa, materials constituting the adhesive may be costly, and the elongation at break (elongation at rupture) of the adhesive cured product may be low.

[Method of producing adhesive]

The method of producing the first adhesive according to the present invention, that is, a two-component adhesive including an agent A containing an epoxy resin, a core-shell rubber particle, and a catalyst for crosslinkable silicon group condensation and an agent B containing a polymer having a crosslinkable silicon group and an epoxy resin curing agent, is not particularly limited.

For example, the epoxy resin, the core-shell rubber particle, and the catalyst for crosslinkable silicon group condensation constituting the agent A are mixed in predetermined amounts, other components are added as needed, and the mixture is degassed and stirred to produce the agent A. In this process, the order of addition of the components, etc. are not particularly limited.

Similarly, the polymer having a crosslinkable silicon group and the epoxy resin curing agent constituting the agent B are mixed in predetermined amounts, other components are added as needed, and the mixture is degassed and stirred to produce the agent B. In this process, the order of addition of the components, etc. are not particularly limited.

Combining the agent A and the agent B into a set can provide the two-component adhesive.

The method of producing the second adhesive according to the present invention, that is, an adhesive containing an epoxy resin, a core-shell rubber particle, a polymer having a crosslinkable silicon group, an epoxy resin curing agent, and a catalyst for crosslinkable silicon group condensation and having a breaking strength (tensile strength at rupture), an elongation at break (elongation at rupture), and storage elastic moduli within specific numerical ranges, is not particularly limited.

For example, the second adhesive can be provided as a two-component adhesive similarly to the first adhesive according to the present invention.

Alternatively, for example, an adhesive composition can be provided by mixing the epoxy resin, the core-shell rubber particle, the catalyst for crosslinkable silicon group condensation, the polymer having a crosslinkable silicon group, and the epoxy resin curing agent in predetermined amounts, adding other components as needed, and degassing and stirring the mixture. In this process, the order of addition of the components, etc. are not particularly limited.

[How to use adhesive]

The first adhesive and the second adhesive according to the present invention may each be used, for example, in a manner that the adhesive is applied to at least one of two adherends, the two adherends are laminated together such that the adhesive is sandwiched therebetween, heat treatment is performed as needed, cooling treatment is performed as needed, and the adhesive is cured to bond the two adherends together.

When the adhesive is applied to the adherend, the adhesive may be applied to the adherend surface wholly, partially, or in a predetermined pattern.

The first adhesive according to the present invention, which is a two-component adhesive, may be used in a manner that the agent A is applied to an adherend surface of one adherend, the agent B is applied to an adherend surface of the other adherend, and the adherends are laminated together, or in a manner that the agent A and the agent B are mixed in advance, and the mixture is then applied to an adherend.

The second adhesive according to the present invention can also be applied to an adherend in the same manner as the first adhesive according to the present invention.

The method of applying the adhesive is not particularly limited, and any conventionally known application method can be selected. For example, the adhesive may be discharged from a predetermined dispenser.

The atmosphere, temperature, and humidity during the application process are not particularly limited, and the adhesive can be applied in the air at room temperature.

The amount and thickness of the adhesive applied are not particularly limited.

In the present invention, an adhesive layer with any desired thickness (e.g., 0.1 mm or more) is preferably formed after lamination. The formation of an adhesive layer with any desired thickness allows thermal strain to be more suitably followed. Examples of the method of forming an adhesive layer with any desired thickness after lamination include adding a bulking agent with a desired particle size to the adhesive and using adherends having shapes that allow the thickness to be retained. After adherends are laminated together, the thickness of the adhesive layer between the adherends can be adjusted by applying pressure to the adherends.

The heat treatment performed as needed can accelerate the curing of the adhesive. The heating temperature, heating time, heating atmosphere, pressure during heating, etc. can be appropriately determined according to, for example, the curing temperature of the adhesive and the product manufacturing process.

For example, the heating temperature may be 50°C or higher, preferably 80°C or higher, and may be 120°C or lower, preferably 100°C or lower. When the adhesive contains water, the heating temperature is 120°C or lower, preferably 100°C or lower from the viewpoint of preventing the formation of bubbles in the adhesive.

The heating method is not particularly limited. For example, a heating furnace, a hot plate, a hot air generator, or the like may be used.

The cooling treatment performed as needed is a treatment for cooling the adherends to room temperature after heating. At this time, aging treatment for aging the adhesive at room temperature can be performed. The cooling treatment allows curing of the adhesive layer between the adherends to proceed.

The adhesive according to the present invention exhibits sufficient adhesion and also has flexibility. Therefore, when the cooling treatment is performed after the heat treatment, the adhesive gradually increases its hardness (storage elastic modulus), which can relax thermal strain generated between the adherends. Furthermore, the aging in a room temperature environment maintains and improves the adhesion and can also relax the strain and improve the hardness.

[Use of adhesive]

The first adhesive and the second adhesive according to the present invention can be used in fabricating a structure by bonding two or more adherends together.

Examples of the adherends include metal materials such as aluminum, iron, titanium, and stainless steel, various resins, resin materials such as carbon fiber-reinforced plastics, paper, cloth, wood, glass, and various ceramics.

The two or more adherends may be formed of the same material or different materials.

The shapes of the two or more adherends are not particularly limited, and may be, for example, shapes corresponding to various parts such as electrical and electronic parts, mechanical parts, and automotive parts.

The first adhesive and the second adhesive according to the present invention are suitable for use in fabricating a structure by bonding together two or more adherends having different linear expansion coefficients. The first adhesive according to the present invention, which is excellent in elongation, toughness, and adhesive strength (storage elastic modulus) after curing, can absorb thermal strain, warpage, and the like caused by a difference in linear expansion coefficient between adherends when cooling and heating treatments are performed, and thus is unlikely to cause the adherends to peel off from each other.

[Cured product]

A cured product according to the present invention is obtained by curing the first adhesive or the second adhesive according to the present invention.

The cured product can be obtained by curing the adhesive in the manner described in [How to use adhesive] above.

[Article]

An article according to the present invention is obtained by bonding with the first adhesive or the second adhesive according to the present invention.

The article is formed by bonding together the various adherends described in [Use of adhesive] above with the first adhesive or the second adhesive according to the present invention in the manner described in [How to use adhesive] above.

Examples of the article include electrical and electronic devices, electrical and electronic parts, mechanical parts, vehicle parts, and vehicle interior components.

EXAMPLES

The present invention will now be described in more detail with reference to Examples and Comparative Examples. It should be noted that these Examples are for illustrative purposes only and should not be construed as limiting the present invention, and various changes and modifications may be made without departing from the spirit and scope of the present invention.

In the Examples, "parts" represents "parts by mass" and "%" represents "mass%", unless otherwise specified.

[Production of two-component adhesive]

<Examples 1 to 10 and Comparative Examples 1 to 4>

Components shown in Table 1 and Table 2 were mixed at mixing ratios (parts by mass) shown in Table 1 and Table 2 to prepare agents A and agents B.

Using the agents A and the agents B obtained, two-component adhesives of Examples 1 to 10 and Comparative Examples 1 to 4 were produced.

[Test method]

<Production of cured adhesive sheet>

For each of the two-component adhesives of Examples 1 to 10 and Comparative Examples 1 to 3, the agent A and the agent B were mixed and stirred, after which the mixture was uniformly loaded into a mold having a depth of 2 mm, aged at 80°C for 30 minutes, and further aged in a 23°C and 50% RH environment for 7 days to produce a cured adhesive sheet.

<Measurement of breaking strength (tensile strength at rupture) and elongation at break (elongation at rupture)>

From the cured adhesive sheet obtained, a dumbbell-shaped No. 3 specimen specified in JIS K 6251 was die-cut and collected. Using the specimen thus obtained, a force was applied to the specimen at a tensile speed set to 10 mm/min until the specimen broke, and the breaking strength (tensile strength at rupture) (MPa) and elongation at break (elongation at rupture) (%) at this time were measured. The method of calculating the elongation at break (elongation at rupture) (%) is as follows. The results are shown in Table 1 and Table 2.

$$\text{Elongation at break (elongation at rupture) (\%)} = ((\text{length of specimen at elongation at break (elongation at rupture)}) - (\text{length of specimen before test}))/(\text{length of specimen before test}) \times 100$$

<Dynamic viscoelasticity (DMA) measurement>

A 10 mm × 40 mm specimen was collected from the cured adhesive sheet obtained to prepare a specimen for DMA measurement.

The specimen obtained was measured for storage elastic moduli (E' (MPa)) using a dynamic viscoelasticity measurement (DMA) apparatus (DMS6100 manufactured by Seiko Instruments Inc.) under the following conditions.

The storage elastic modulus (MPa) at 20°C and the storage elastic modulus (MPa) at 80°C are shown in Table 1 and Table 2.

(Conditions of DMA measurement)

Measurement frequency: 1 Hz, measurement mode: tensile, heating rate: 5°C/min, measurement temperature: -100°C to 200°C

[Table 1]

|  |  | Example | | | | | | |
|---|---|---|---|---|---|---|---|---|
|  |  | 1 | 2 | 3 | 4 | 5 | 6 | 7 |
| Agent A | Epoxy resin 1 |  | 36.0 | 36.0 | 9.0 | 18.0 | 27.0 | 18.0 |
|  | Epoxy resin 2 |  |  |  |  |  |  |  |
|  | DOTL | 0.1 | 0.1 | 0.1 | 0.1 | 0.1 | 0.1 | 0.1 |
|  | Water | 0.2 | 0.2 | 0.2 | 0.2 | 0.2 | 0.2 | 0.2 |
|  | Core-shell rubber particle 1 | 60.0 |  |  | 45.0 | 30.0 | 15.0 | 30.0 |
|  | Core-shell rubber particle 2 |  | 24.0 |  |  |  |  |  |
| Total amount of agent A | | 60.3 | 60.3 | 36.3 | 54.3 | 48.3 | 42.3 | 48.3 |
| Agent B | Polymer 1 having crosslinkable silicon group | 40.0 | 40.0 | 40.0 | 40.0 | 40.0 | 40.0 | 40.0 |
|  | Polymer 2 having crosslinkable silicon group |  |  |  |  |  |  | 27.0 |
|  | Epoxy curing agent | 4.0 | 4.0 | 4.0 | 4.0 | 4.0 | 4.0 | 4.0 |
|  | Aminosilane | 1.0 | 1.0 | 1.0 | 1.0 | 1.0 | 1.0 | 1.0 |
|  | Core-shell rubber particle 2 |  |  | 24.0 |  |  |  |  |
| Total amount of agent B | | 45.0 | 45.0 | 69.0 | 45.0 | 45.0 | 45.0 | 72.0 |
| Total amount of agent A and agent B | | 105.3 | 105.3 | 105.3 | 99.3 | 93.3 | 87.3 | 120.3 |
| Breaking strength (MPa) | | 13.5 | 13.5 | 13.5 | 12.2 | 12.9 | 12.7 | 14.1 |
| Elongation at break (%) | | 108.0 | 63.0 | 63.0 | 131.0 | 150.0 | 163.0 | 204.0 |
| 20°C storage elastic modulus (MPa) | | 170 | 280 | 280 | 130 | 110 | 100 | 570 |
| 80°C storage elastic modulus (MPa) | | 96 | 130 | 130 | 65 | 59 | 53 | 62 |

[Table 2]

|  |  | Example | | | Comparative Example | | | |
|---|---|---|---|---|---|---|---|---|
|  |  | 8 | 9 | 10 | 1 | 2 | 3 | 4 |
| Agent A | Epoxy resin 1 | 18.0 |  |  | 36.0 |  |  |  |
|  | Epoxy resin 2 |  |  |  |  |  | 60.0 |  |
|  | DOTL | 0.1 | 0.1 | 0.1 | 0.1 | 0.1 | 0.1 | 0.1 |
|  | Water | 0.2 | 0.2 | 0.2 | 0.2 | 0.2 | 0.2 | 0.2 |
|  | Core-shell rubber particle 1 | 30.0 | 60.0 | 60.0 |  |  |  | 60.0 |
|  | Core-shell rubber particle 2 |  |  |  |  | 24.0 |  |  |
| Total amount of agent A | | 48.3 | 60.3 | 60.3 | 36.3 | 24.3 | 60.3 | 60.3 |

(continued)

|  |  | Example | | | Comparative Example | | | |
|---|---|---|---|---|---|---|---|---|
|  |  | 8 | 9 | 10 | 1 | 2 | 3 | 4 |
| Agent B | Polymer 1 having crosslinkable silicon group | 40.0 | 40.0 | 40.0 | 40.0 | 40.0 | 40.0 |  |
|  | Polymer 2 having crosslinkable silicon group | 13.5 |  |  |  |  |  |  |
|  | Epoxy curing agent | 4.0 | 4.0 | 7.0 | 4.0 | 4.0 | 4.0 | 4.0 |
|  | Aminosilane | 1.0 | 2.0 | 1.0 | 1.0 | 1.0 | 1.0 | 1.0 |
|  | Core-shell rubber particle 2 |  |  |  |  |  |  |  |
| Total amount of agent B | | 58.5 | 46.0 | 48.0 | 45.0 | 45.0 | 45.0 | 5.0 |
| Total amount of agent A and agent B | | 106.8 | 106.3 | 108.3 | 81.3 | 69.3 | 105.3 | 65.3 |
| Breaking strength (MPa) | | 14.0 | 15.1 | 14.6 | 13.1 | 3.2 | 4.0 | - |
| Elongation at break (%) | | 252.0 | 132.0 | 113.0 | 219.0 | 176.0 | 105.0 | - |
| 20°C storage elastic modulus (MPa) | | 250 | 210 | 210 | 70 | 6 | 15 | - |
| 80°C storage elastic modulus (MPa) | | 53 | 110 | 150 | 33 | 6 | 10 | - |

The unit of the mixing amounts of the components in Table 1 and Table 2 is "parts by mass". The components of the adhesives (the agent A and the agent B) in Table 1 and Table 2 are as follows.

· Epoxy resin 1: Bisphenol A epoxy resin (jER828 manufactured by Mitsubishi Chemical Corporation)
· Epoxy resin 2: Carboxyl-terminated butadiene nitrile rubber (CTBN) modified epoxy resin (HyPox RA840 manufactured by Huntsman Corporation)
· DOTL: Dioctyltin dilaurate
· Core-shell rubber particle 1: An epoxy resin-core-shell rubber particle composition containing a bisphenol A epoxy resin and a core-shell rubber particle including a core formed of a butadiene rubber particle and a shell layer formed of an acrylic resin at an epoxy resin/core-shell rubber particle ratio of 6:4 (MX154 manufactured by Kaneka Corporation)
· Core-shell rubber particle 2: A core-shell rubber particle including a core formed of a butadiene rubber particle and a shell layer formed of an acrylic resin (ZEFIAC F351 manufactured by Aica Kogyo Company, Limited)
· Polymer 1 having crosslinkable silicon group: A polyoxyalkylene polymer having a crosslinkable silicon group (SAX575 manufactured by Kaneka Corporation)
· Polymer 2 having crosslinkable silicon group: A (meth)acrylic polymer having a crosslinkable silicon group (ACTFLOW SAS-08 manufactured by Soken Chemical & Engineering Co., Ltd.)
· Epoxy curing agent: 2,4,6-Tris(dimethylaminomethyl)phenol
· Aminosilane: [3-(2-Aminoethyl)aminopropyl]trimethoxysilane

Table 1 and Table 2 show the following.

The adhesive cured products of Examples 1 to 10 each have a high breaking strength (tensile strength at rupture) (MPa) and a high elongation at break (elongation at rupture) (%) and further have a high storage elastic modulus (MPa) at 20°C and a high storage elastic modulus (MPa) at 80°C, indicating that these adhesives are excellent in elongation and adhesive strength (storage elastic modulus) after curing and resistant to peeling due to a temperature history.

The adhesive cured product of Comparative Example 1, which does not contain a core-shell rubber particle, has a low storage elastic modulus (MPa) at 20°C and a low storage elastic modulus (MPa) at 80°C, indicating that this adhesive has a problem with adhesive strength (storage elastic modulus) after curing.

The adhesive cured product of Comparative Example 2, which does not contain an epoxy resin, has a low breaking strength (tensile strength at rupture) (MPa), a low storage elastic modulus (MPa) at 20°C, and a low storage elastic modulus (MPa) at 80°C, indicating that this adhesive has problems with elongation and adhesive strength (storage elastic modulus) after curing.

The adhesive cured product of Comparative Example 3, which contains a carboxyl-terminated butadiene nitrile rubber (CTBN) modified epoxy resin and does not contain a core-shell rubber particle, has a low breaking strength (tensile strength at rupture) (MPa), a low storage elastic modulus (MPa) at 20°C, and a low storage elastic modulus (MPa) at 80°C, indicating that this adhesive has problems with elongation and adhesive strength (storage elastic modulus) after curing.

The adhesive cured product of Comparative Example 4, not containing a polymer having a crosslinkable silicon group, was hard and brittle, so that a specimen having a predetermined shape could not be prepared.

While the embodiments and examples of the present invention have been described above, the embodiments and examples described above are not intended to limit the claimed invention. It should be noted that all combinations of the features described in the embodiments and the examples are not necessarily essential to means for solving the problems of the invention, and various modifications can be made without departing from the spirit of the invention.

**Claims**

1. A two-component adhesive comprising:

   agent A containing an epoxy resin; and
   agent B containing a polymer having a crosslinkable silicon group and an epoxy resin curing agent,
   wherein a core-shell rubber particle is contained in the agent A and/or the agent B, and a catalyst for crosslinkable silicon group condensation is contained in the agent A and/or the agent B.

2. The two-component adhesive according to Claim 1, wherein a (meth)acrylic polymer is contained in the agent B.

3. An adhesive comprising an epoxy resin, a core-shell rubber particle, a polymer having a crosslinkable silicon group, an epoxy resin curing agent, and a catalyst for crosslinkable silicon group condensation,

   wherein, of a cured product of the adhesive obtained by heat curing at 80°C for 30 minutes, followed by aging in a 23°C and 50% RH environment for 7 days, a breaking strength (tensile strength at rupture) is 5 MPa or more, and an elongation at break (elongation at rupture) is 30% or more, as measured in accordance with JIS K 6251, and
   after heat curing at 80°C for 30 minutes, followed by aging in a 23°C and 50% RH environment for 7 days, storage elastic moduli at 1 Hz in tensile mode are 100 to 1000 MPa at 20°C and 50 to 1000 MPa at 80°C, as measured in accordance with JIS K 7198 (abolished and replaced with JIS K 7244-4).

4. A cured product obtained by curing the adhesive according to any one of Claims 1 to 3.

5. An article obtained by bonding with the adhesive according to any one of Claims 1 to 3.

| | INTERNATIONAL SEARCH REPORT | International application No. |
|---|---|---|
| | | **PCT/JP2021/028285** |

**A. CLASSIFICATION OF SUBJECT MATTER**

*C09J 11/06*(2006.01)i; *C09J 133/00*(2006.01)i; *C09J 163/00*(2006.01)i; *C09J 201/02*(2006.01)i
FI: C09J163/00; C09J133/00; C09J201/02; C09J11/06

According to International Patent Classification (IPC) or to both national classification and IPC

**B. FIELDS SEARCHED**

Minimum documentation searched (classification system followed by classification symbols)

C09J11/06; C09J133/00; C09J163/00; C09J201/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/123934 A1 (KANEKA CORP.) 27 June 2019 (2019-06-27)<br>claims, paragraphs [0013]-[0018], [0031]-[0045], [0081]-[0092], examples 1-6 | 1-5 |
| Y | JP 2013-241479 A (KANEKA CORP.) 05 December 2013 (2013-12-05)<br>claims, paragraphs [0019], [0024]-[0047], example 3 | 1-5 |
| Y | JP 2002-309077 A (KANEGAFUCHI CHEM IND CO., LTD.) 23 October 2002 (2002-10-23)<br>claims, examples 1-4, paragraph [0086] | 1-5 |
| A | JP 2018-53026 A (KANEKA CORP.) 05 April 2018 (2018-04-05)<br>claims, examples 1-26 | 1-5 |

☐ Further documents are listed in the continuation of Box C.  ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **08 October 2021** | **19 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT

Information on patent family members

International application No.

**PCT/JP2021/028285**

| Patent document cited in search report | | | Publication date (day/month/year) | Patent family member(s) | | | Publication date (day/month/year) |
|---|---|---|---|---|---|---|---|
| WO | 2019/123934 | A1 | 27 June 2019 | (Family: none) | | | |
| JP | 2013-241479 | A | 05 December 2013 | TW | 201224047 | A | |
| JP | 2002-309077 | A | 23 October 2002 | (Family: none) | | | |
| JP | 2018-53026 | A | 05 April 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002309077 A
- JP 2010270198 A
- JP 2019199606 A
- JP 2010275411 A
- JP 5569703 B
- WO 2015088021 A

**Non-patent literature cited in the description**

- *Bulletin of the American Physical Society, Series 2,* 1956, vol. 1 (3), 123
- The Finish & Paint. Toryo Publishing Co., Ltd, 1982, vol. 10